# EUROPÄISCHE PATENTSCHRIFT

(11) **EP 2 488 726 B1**
(45) Veröffentlichungstag und Bekanntmachung des Hinweises auf die Patenterteilung: **30.04.2014**
(21) Anmeldenummer: 10754462.9
(22) Anmeldetag: 10.09.2010
(51) Int. Cl.: F01D 11/00, F01D 11/02, F01D 25/24, F02C 7/28, F16J 15/44

(54) **DAMPFTURBINE MIT EINER DICHTUNGSANORDNUNG AM DAMPFTURBINENGEHÄUSE, UMFASSEND EINEN JUSTIERBAREN DICHTRING**
STEAM TURBINE WITH SEAL ASSEMBLY COMPRISING AN ADJUSTABLE SEAL RING ON THE STEAM TURBINE CASING
TURBINE À VAPEUR AVEC AGENCEMENT D'ÉTANCHÉITÉ DANS LE CARTER DE TURBINE À VAPEUR COMPRENANT UN ANNEAU D'ÉTANCHÉITÉ AJUSTABLE

(30) Priorität: 16.10.2009 DE 102009049690
(43) Veröffentlichungstag der Anmeldung: 22.08.2012
(73) Patentinhaber: Siemens Aktiengesellschaft, 80333 München (DE)
(72) Erfinder: LOCHNER, Klaus, 02829 Markersdorf-Pfaffendorf (DE); MUCHA, Andreas, 02943 Weißwasser (DE)
(86) Internationale Anmeldenummer: PCT/EP2010/063272
(87) Internationale Veröffentlichungsnummer: WO 2011/045127

(56) Entgegenhaltungen:
- DE-A1- 1 817 044
- DE-B- 1 110 655
- JP-A- 2002 364 308
- JP-A- 2007 046 540
- US-A- 3 019 035
- US-A- 3 147 952
- US-B1- 6 382 632

## Beschreibung

Die vorliegende Erfindung betrifft eine Dampfturbine mit einer Dichtungsanordnung zur Abdichtung eines Ringspaltes zwischen einem Öffnungsrand einer Öffnung in einer geteilten Stirnwand eines Dampfturbinengehäuses und einem sich in einer Axialrichtung durch die Öffnung hindurch erstreckenden Turbinenläufer.

Eine Dampfturbine wird üblicherweise in einer Kraftwerksanlage oder einer Industrieanlage zum Antrieb eines elektrischen Generators oder einer Arbeitsmaschine (z. B..Kompressor) eingesetzt. Hierfür wird die thermische Energie von zugeführtem Dampf mittels eines in einem Dampfturbinengehäuse drehbar gelagerten Turbinenläufer in mechanische Arbeit umgewandelt. Der an wenigstens einem hochdruckseitigen Dampfeinlass in das Turbinengehäuse einströmende Dampf treibt den üblicherweise mit einer Vielzahl von Laufschaufelreihen ausgestatteten Turbinenläufer bei der axialen Durchströmung des Turbinengehäuses und tritt an wenigstens einem niederdruckseitigen Dampfauslass wieder aus. Der Dampfaustritt erfolgt oftmals über ein Abdampfgehäuse der Dampfturbine in einen dieser nachgeschalteten Kondensator.

Um den Turbinenläufer ein- und ausbauen zu können, ist ein üblicherweise horizontal geteiltes Dampfturbinengehäuse (mit horizontaler Gehäuseteilfuge) vorgesehen. Stirnwände des Dampfturbinengehäuses, d. h. orthogonal zur Axialrichtung sich erstreckende Gehäusewände, die mit einer Durchtrittsöffnung zum Durchtritt des Turbinenläufers versehen sind, sind aus demselben Grund im Bereich der Öffnung geteilt ausgebildet. Eine derartige Stirnwand kann z. B. aus oberen und unteren Stirnwandteilen zusammengesetzt sein, die jeweils einem oberen bzw. unteren Turbinengehäuseteil eines horizontal geteilten Dampfturbinengehäuses zugeordnet (einstückig verbunden oder als separate Wandteile angebaut) sind.

Zur Vermeidung einer axialen Dampfströmung durch einen Ringspalt hindurch, der sich zwischen einem Öffnungsrand einer solchen Öffnung und dem sich durch die Öffnung hindurch erstreckenden Turbinenläufer ergibt, ist eine geeignete Dichtungsanordnung vorzusehen.

Eine Dichtungsanordnung zur Abdichtung eines Ringspalts bei einer Dampfturbine ist aus der DE 1 110 655 bekannt. Gemäß dieses Stands der Technik wird ein Dichtring aus zueinander beweglichen Segmenten gebildet, welche sich im Betrieb der Dampfturbine variabel, je nach Höhe des Dampfdruckes, verschieben.

Aus der JP-2007 46540 ist eine Dichtungsanordnung für eine Turbine bekannt. Bei diesem Stand der Technik ist ein Dichtring mittels vier in Umfangsrichtung verteilt angeordneten Justiereinrichtungen bezüglich einer Dichtungsschürze verstellbar.

Aus der US 3,019,035 ist es bekannt, bei einer Gasturbine einen Dichtring mit Hilfe mehrerer in Umfangsrichtung verteilt angeordneter Loch-Langloch-Verschraubungen in einer gewünschten Position zu montieren.

Die US 6,382,632 B1 beschreibt eine für eine thermische Turbomaschine geeignete Dichtungsanordnung, deren radiale und axiale Position veränderbar ist. Eine Neupositionierung hinsichtlich der radialen Position ist durch Einsetzen geeigneter Abstandhalter vorgesehen.

Die US 3,147,952 offenbart eine Anordnung zur radialen Positionierung einer unteren Leitgitterhälfte in einer Turbine mittels einer Fixiereinrichtung an einer Stelle und zwei Justiereinrichtungen an benachbarten Stellen.

Es ist eine Aufgabe der Erfindung, eine Dampfturbine mit einer Dichtungsanordnung der eingangs genannten Art anzugeben, mittels welcher eine zuverlässige Dichtungsfunktion ermöglicht wird, und welche eine vergleichsweise einfache Wartung der Dampfturbine einschließlich der Dichtungsanordnung ermöglicht.

Diese Aufgabe wird gemäß der Erfindung durch eine Dampfturbine mit den Merkmalen des Anspruchs 1 gelöst. Die abhängigen Ansprüche betreffen vorteilhafte Weiterbildungen der Erfindung.

Bei der erfindungsgemäßen Dampfturbine umfasst die Dichtungsanordnung einen aus mehreren miteinander verbundenen Dichtringsegmenten zusammengesetzten Dichtring, von welchem
- wenigstens eine Stelle im Ringverlauf mittels einer Justiereinrichtung in wenigstens einer Richtung orthogonal zur Axialrichtung justierbar ist, und
- wenigstens eine andere Stelle im Ringverlauf mittels einer Fixiereinrichtung in wenigstens einer Richtung orthogonal zur Axialrichtung fixierbar ist.

Der aus mehreren Dichtringsegmenten zusammengesetzte, d. h. geteilt ausgeführte Dichtring ist eine Voraussetzung für einen segmentweisen Einbau bzw. Ausbau des Dichtringes. Die einzelnen Dichtringsegmente können z. B. miteinander verschraubt sein. Die Dichtungsfunktion kann sich dadurch ergeben, dass der abzudichtende Ringspalt bei montiertem Dichtring im Wesentlichen vollständig vom Dichtring besetzt wird. Gemäß einer bevorzugten Ausführungsform ist die Dichtungsanordnung jedoch als eine Labyrinthdichtung ausgebildet, bei welcher im Bereich des Ringspaltes ein Labyrinth aus Komponenten vorgesehen ist, die zumindest teilweise durch den Dichtring gebildet oder an diesem befestigt sind. Beispielsweise kann die Labyrinthdichtung mit radial sich erstreckenden Labyrinthblechen realisiert sein, die am Außenumfang einer Turbinenläuferwelle und/oder am Innenumfang des Dichtringes ausgebildet oder befestigt sind.

Die oben erläuterte Kombination aus Justierbarkeit an einer Stelle im Dichtringverlauf und Fixierbarkeit an einer anderen Stelle im Dichtringverlauf gewährleistet vorteilhaft eine gut definierte Justierung des Dichtringes insgesamt hinsichtlich seiner radialen Positionierung (orthogonal zur Axialrichtung). Mit einer solchen genauen Positionierung kann im Turbinenbetrieb eine Beschädigung des Turbinenläufers und/oder von Komponenten der Dichtungsanordnung vermieden und die Dichtungsfunktion optimiert werden.

Für die Erfindung ist des Weiteren der Aufbau der Justiereinrichtung wesentlich. Diese umfasst:
- eine die Stirnwand in Axialrichtung durchsetzende Justierstiftöffnung,
- einen in der Justierstiftöffnung gehaltenen Justierstift mit einem exzentrisch ausgebildeten Justierstiftkopf an einem Ende des Justierstiftes, und
- eine an der zu justierenden Stelle des Dichtringes ausgebildete Justierstiftaufnahme, z. B. Nut, in welche der Justierstiftkopf in Axialrichtung eingreift.

Die einfach aufgebaute Justiereinrichtung ermöglicht es bei Wartungsarbeiten, das betreffende Dichtringsegment durch Ausbau des Justierstiftes aus der Justierstiftöffnung für eine Drehung freizugeben, was z. B. dann von großem Vorteil ist, wenn das Dichtringsegment bei weiterhin eingebautem Turbinenläufer durch eine Verschwenkung bzw. Drehung um die Läuferachse herum ausgebaut werden soll.

Insbesondere wenn die betreffende Stirnwand im Bereich der Öffnung horizontal geteilt ausgebildet ist, so ist eine Ausführungsform bevorzugt, bei welcher der Dichtring aus zwei Dichtringsegmenten zusammengesetzt ist, nämlich aus oberen und unteren Dichtringhälften. Die Justiereinrichtung und die Fixiereinrichtung sind bevorzugt an demselben Dichtringsegment vorgesehen, beispielsweise an einer unteren Dichtringhälfte der vorstehend erwähnten Art.

Die zum Durchtritt des Turbinenläufers vorgesehene Öffnung in der Stirnwand ist bevorzugt im Wesentlichen kreisrund, wobei die Teilungsebene der Stirnwand durch ein Öffnungszentrum (z. B. Kreismittelpunkt) verläuft.

Der sich zwischen dem Öffnungsrand und dem Turbinenläufer bzw. einer Turbinenläuferwelle ergebende Ringspalt kann im Wesentlichen kreisringförmig sein, z. B. mit oberen und unteren Kreisringhälften jeweils oberhalb bzw. unterhalb einer horizontal geteilten Stirnwand.

In einer bevorzugten Ausführungsform besitzt der Dichtring im Querschnitt betrachtet einen in Axialrichtung ausgedehnten und in den Ringspalt eingreifenden oder bevorzugt diesen Ringspalt durchsetzenden Dichtabschnitt und einen in Radialrichtung ausgedehnten, mit der Stirnwand (im Bereich des Öffnungsrandes) überlappenden und die Justierstiftaufnahme und/oder Fixierstiftaufnahme aufweisenden Flanschabschnitt.

Gemäß einer Ausführungsform ist vorgesehen, dass die Justiereinrichtung geringfügig unterhalb einer horizontalen Teilungsebene der Stirnwand vorgesehen ist, z. B. in einer vertikalen Entfernung von der Teilungsebene von weniger als 10 % der vertikalen Gesamtausdehnung des Dichtringes.

Gemäß einer Ausführungsform ist vorgesehen, dass die Justiereinrichtung eine Justierung in einer Richtung quer, insbesondere orthogonal, zu einer bei der Fixiereinrichtung vorgesehenen Fixierrichtung gestattet. Dementsprechend kann z. B. insbesondere bei einer horizontalen Fixiermöglichkeit (durch die Fixiereinrichtung) insbesondere eine vertikale Justiermöglichkeit (durch die Justiereinrichtung) vorgesehen sein.

Gemäß einer Ausführungsform ist vorgesehen, dass die Justierstiftöffnung als eine Bohrung mit einem konischen Bohrungsabschnitt zur Fixierung eines entsprechend konischen Abschnittes des Justierstiftes ausgebildet ist. Damit kann in einfacher Weise eine Verdrehsicherung des Justierstiftes (durch Klemmung im konischen Bohrungsabschnitt) realisiert werden. Unabhängig davon kann der konische Bohrungsabschnitt in Verbindung mit einem korrespondierend konischen Justierstiftabschnitt auch für eine axiale Sicherung (Halterung) des Justierstiftes in der Justierstiftöffnung dienen.

Gemäß einer Ausführungsform ist vorgesehen, dass der Justierstift an seinem dem Justierstiftkopf abgewandten Ende mit einem Gewinde ausgebildet ist, insbesondere mit einem Innengewinde in einer axialen Bohrung am Stiftende. Dies ermöglicht durch Einschrauben bzw. Aufschrauben einer Schraube, den Justierstift in Axialrichtung zur Klemmung in der Justierstiftöffnung zu belasten.

Gemäß einer Ausführungsform ist vorgesehen, dass der Justierstiftkopf von einem Gleitstein umgeben ist, an dessen oberen Rand ein oberer Rand der Justierstiftaufnahme anliegt.

Gemäß einer Ausführungsform ist vorgesehen, dass der Justierstiftkopf eine zur Drehbarkeit des Justierstiftes mittels eines Werkzeuges ausgebildete Formgestaltung besitzt. Bei der Formgestaltung kann es sich z. B. um einen "Außenmehrkant" wie z. B. einen Außensechskant handeln, der mit einem Steckschlüssel oder dergleichen gedreht werden kann. Alternativ kommen auch andere Formgestaltungen in Betracht, insbesondere auch ein "Innenmehrkant" wie z. B. ein Innensechskant.

Gemäß einer Ausführungsform ist vorgesehen, dass die Justierstiftaufnahme als eine zum Außenumfang des Dichtringes offene Nut ausgebildet ist. Eine solche Nut ist bevorzugt in radialer Richtung zur Turbinenläuferachse angeordnet.

Die Fixiereinrichtung kann z. B. umfassen:
- eine die Stirnwand in Axialrichtung durchsetzende Fixierstiftöffnung,
- einen in der Fixierstiftöffnung gehaltenen Fixierstift mit einem Fixierstiftkopf an einem Ende des Fixierstiftes, und
- eine an der zu fixierenden Stelle des Dichtringes ausgebildete Fixierstiftaufnahme, in welche der Fixierstiftkopf in Axialrichtung eingreift.

Die so aufgebaute Fixiereinrichtung ermöglicht es bei Wartungsarbeiten, die Fixierwirkung durch Ausbau des Fixierstiftes aus der Fixierstiftöffnung aufzuheben, was z. B. dann von großem Vorteil ist, wenn das betreffende Dichtringsegment bei weiterhin eingebautem Turbinenläufer durch eine Verschwenkung bzw. Drehung um die Läuferachse herum ausgebaut werden soll.

In einer Ausführungsform ist vorgesehen, dass die Fixiereinrichtung am unteren Scheitelpunkt des Dichtringes vorgesehen ist.

In einer Ausführungsform ist vorgesehen, dass die Fixiereinrichtung in einer Richtung quer, insbesondere orthogonal, zu einer bei der Justiereinrichtung vorgesehenen Justierrichtung fixiert. Dementsprechend kann z. B. bei einer vertikalen Justiermöglichkeit (durch die Justiereinrichtung) insbesondere eine horizontale Fixiermöglichkeit (durch die Fixiereinrichtung) vorgesehen sein.

In einer Ausführungsform ist vorgesehen, dass die Fixierstiftöffnung als eine Bohrung mit einem konischen Bohrungsabschnitt zur Fixierung eines entsprechend konischen Abschnittes des Fixierstiftes ausgebildet ist. Damit kann in einfacher Weise eine Verdrehsicherung des Fixierstiftes (durch Klemmung im konischen Bohrungsabschnitt) realisiert werden, falls die Drehstellung des Fixierstiftes eine Rolle spielt. Unabhängig davon kann der konische Bohrungsabschnitt in Verbindung mit einem korrespondierend konischen Fixierstiftabschnitt auch für eine axiale Sicherung (Halterung) des Fixierstiftes in der Fixierstiftöffnung dienen. Die Verengung des konischen Bohrungsabschnittes ist bevorzugt in Richtung zum Fixierstiftkopf hin vorgesehen.

In einer Ausführungsform ist vorgesehen, dass die Fixierstiftöffnung einen Innengewindeabschnitt zum Einschrauben einer Halteschraube besitzt, welche den Fixierstift in der Fixierstiftöffnung hält. Eine derartige Halteschraube kann z. B. auf ein dem Fixierstiftkopf abgewandtes Ende des Fixierstiftes drücken, um den Fixierstift in dem konischen Bohrungsabschnitt zu verpressen. Alternativ kann die Halteschraube z. B. einen hohlen Schraubenschaft aufweisen (gegebenenfalls eine axiale Durchgangsbohrung), in welchem der Endabschnitt des Fixierstiftes aufgenommen ist, wobei eine derartige "Hohlschraube" den Fixierstift an einer entsprechend dimensionierten Umfangsschulter des Fixierstiftes belasten und somit in den konischen Bohrungsabschnitt pressen kann. Hierfür kann z. B. vorgesehen sein, dass sich an den konischen Bohrungsabschnitt, an dessen größeren Konusende, ein z. B. im Durchmesser nennenswert vergrößerter Innengewindeabschnitt zum Einschrauben der Halteschraube anschließt.

In einer Ausführungsform ist vorgesehen, dass der Fixierstiftkopf wenigstens eine seitliche Abflachung aufweist. Eine damit erzielte kleinere Dimensionierung der "Fixierstelle" ermöglicht in der Praxis vorteilhaft eine entsprechend definiertere Positioniermöglichkeit für den Dichtring. Beispielsweise kann der Fixierstiftkopf zwei parallele Abflachungen auf zwei einander entgegen gesetzten Seiten besitzen, die z. B. mit sehr geringem Spiel an korrespondierenden Begrenzungsflächen der Fixierstiftaufnahme zur Anlage kommen.

In einer Ausführungsform ist vorgesehen, dass der Fixierstift an seinem dem Fixierstiftkopf abgewandten Ende eine zur Drehbarkeit des Fixierstiftes mittels eines Werkzeuges ausgebildete Formgestaltung besitzt. Bei der Formgestaltung kann es sich z. B. um einen "Außenmehrkant" wie z. B. einen Außensechskant handeln, der mit einem Steckschlüssel oder dergleichen gedreht werden kann. Alternativ kommen auch andere Formgestaltungen in Betracht, insbesondere auch ein "Innenmehrkant" wie z. B. ein Innensechskant.

Eine äußere, zum Werkzeugangriff geeignet ausgebildete Formgestaltung dieses dem Fixierstiftkopf abgewandten Endes des Fixierstiftes ist jedoch bevorzugt. Insbesondere ermöglicht diese Variante, dass der Fixierstift an seinem dem Fixierstiftkopf abgewandten Ende mit einem Innengewinde versehen ist. Ein Gewinde an diesem Stiftende ist sehr nützlich, um den Fixierstift in einfacher Weise aus der Fixierstiftöffnung herausziehen zu können (indem zunächst ein Hilfsmittel (eine Schraube oder dergleichen) in das Innengewinde eingeschraubt wird, und dann der somit an diesem Hilfsmittel befestigte Fixierstift durch ein Ziehen am Hilfsmittel aus der Fixierstiftöffnung herausgezogen wird).

In einer Ausführungsform ist vorgesehen, dass die Fixierstiftaufnahme als eine zum Außenumfang des Dichtringes offene Nut ausgebildet ist. Prinzipiell kann damit ermöglicht werden, dass bei in der Fixierstiftöffnung befindlichem bzw. verbleibendem Fixierstift das betreffende Dichtringsegment eingebaut oder ausgebaut wird. Ein Ineingriffbringen bzw. Außereingriffbringen des Fixierstiftkopfes kann nämlich dann über die Öffnung der Nut (zum Außenumfang des Dichtringes hin) erfolgen.

In dieser Hinsicht ist z. B. die oben bereits erwähnte Weiterbildung vorteilhaft, bei welcher die Fixiereinrichtung am unteren Scheitelpunkt des Dichtringes vorgesehen ist, so dass zumindest nach einem Ausbau des Turbinenläufers das Dichtringsegment ganz einfach nach oben abgenommen werden kann.

Die vorliegende Erfindung wird nachfolgend anhand eines Ausführungsbeispiels mit Bezug auf die beigefügten Zeichnungen weiter beschrieben. Es stellen dar:
- Fig. 1: eine Radialschnittansicht einer Dichtungsanordnung gemäß eines Ausführungsbeispiels,
- Fig. 2: eine perspektivische, teilweise in Vertikalrichtung geschnittene Detailansicht der Dichtungsanordnung zur Veranschaulichung einer Fixiereinrichtung,
- Fig. 3: eine der Fig. 2 entsprechende Ansicht, jedoch vollständig geschnitten, und
- Fig. 4: eine perspektivische, in Horizontalrichtung teilweise geschnittene Detailansicht der Dichtungsanordnung zur Veranschaulichung einer Justiereinrichtung.

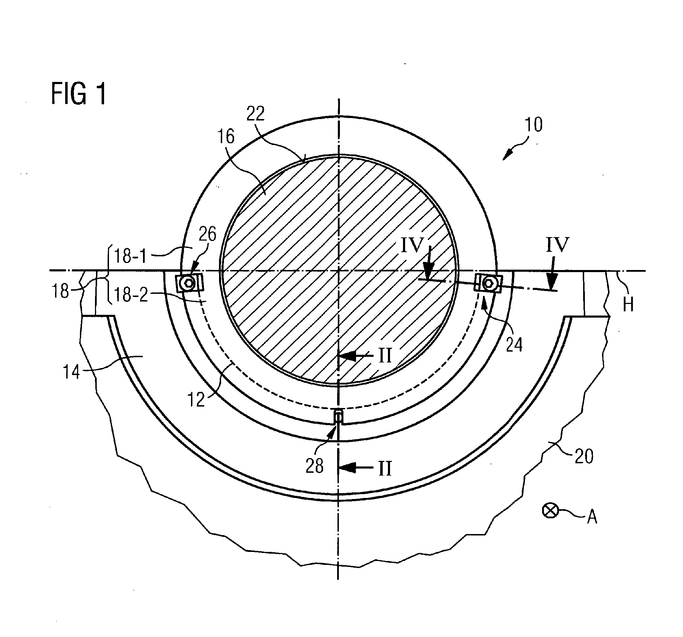

Fig. 1 zeigt eine Dichtungsanordnung 10 zur Abdichtung eines Ringspaltes zwischen einem Öffnungsrand 12 einer Öffnung in einer geteilten Stirnwand 14 eines Dampfturbinengehäuses und einen sich in einer Axialrichtung A durch die Öffnung hindurch erstreckenden Turbinenläufer 16.

Die Dichtungsanordnung 10 umfasst einen aus einer oberen Dichtringhälfte 18-1 und einer unteren Dichtringhälfte 18-2 entlang einer horizontalen Teilungsebene H zusammengesetzten, kreisringförmigen Dichtring 18. Die Dichtringhälften 18-1, 18-2 (allgemein: Dichtringsegmente) sind im dargestellten Ausführungsbeispiel z. B. miteinander verschraubt.

Die horizontale Teilungsebene H ist gleichzeitig die Teilungsebene für das geteilt ausgebildete Dampfturbinengehäuse, welches in Fig. 1 mit abgenommenem oberen Turbinengehäuseteil dargestellt ist, so dass in Fig. 1 lediglich ein unteres Turbinengehäuseteil 20 ersichtlich ist. Auch von der Stirnwand 14 ist in Fig. 1 lediglich eine untere Stirnwandhälfte dargestellt. Die obere Stirnwandhälfte ist zusammen mit der oberen Gehäuseteilhälfte abgenommen. Die horizontale Teilungsebene H bildet auch die Teilungsebene der geteilt ausgebildeten Stirnwand 14.

Die Öffnung der Stirnwand 14 wird im Wesentlichen durch den Turbinenläufer 16 ausgefüllt. Der verbleibende, abzudichtende Ringspalt zwischen dem Außenumfang 22 des Läufers 16 und dem Öffnungsrand 12 ist in der Darstellung von Fig. 1 durch den Dichtring 18 verdeckt.

Der Dichtring 18 kann in seiner radialen Position, also orthogonal zur Axialrichtung A, mittels zweier Justiereinrichtungen 24, 26 und einer Fixiereinrichtung 28 in nachfolgend beschriebener Weise justiert werden:

Jede der weiter unten noch detailliert beschriebenen Justiereinrichtungen 24, 26 ermöglicht es, die betreffende Stelle im Ringverlauf in Vertikalrichtung zu justieren. Wie dargestellt befinden sich die beiden Justierstellen jeweils knapp unterhalb der Teilungsebene H. Im beschriebenen Ausführungsbeispiel bestimmen die Einstellungen der Justiereinrichtungen 24, 26 lediglich die vertikalen Positionen der beiden betreffenden Ringstellen, wohingegen die horizontalen Positionen dieser Ringstellen durch die Justiereinrichtung 24, 26 als solche nicht festgelegt werden.

Mittels der Fixiereinrichtung 28 wird im beschriebenen Ausführungsbeispiel eine am unteren Scheitelpunkt des Dichtringes 18 befindliche Stelle im Ringverlauf in Horizontalrichtung fixiert. Demgegenüber gestattet die Fixiereinrichtung 28 an dieser Stelle eine freie Bewegbarkeit in Vertikalrichtung.

Die beiden Justiereinrichtungen 24, 26 und die Fixiereinrichtung 28 sind allesamt an der unteren Dichtringhälfte 18-2 vorgesehen, um die Position der unteren Dichtringhälfte 18-2 orthogonal zur Axialrichtung A zu definieren. Aufgrund der Anbindung (hier Verschraubung) der oberen Dichtringhälfte 18-1 an der unteren Dichtringhälfte 18-2 wird damit eine entsprechende Positionierung des Dichtringes 18 insgesamt realisiert.

Die Positionierung der unteren Dichtringhälfte 18-2 (bzw. des Dichtringes 18) funktioniert wie folgt: Ausgehend von der dargestellten Situation kann durch ein gleichzeitiges Anheben oder Absenken der Dichtringhälfte 18-2 an den Stellen der Justiereinrichtungen 24, 26 eine entsprechende Anhebung bzw. Absenkung der Dichtringhälfte 18-2 (in Vertikalrichtung) realisiert werden. Wenn jedoch mittels der Justiereinrichtungen 24, 26 eine ungleichmäßige Anhebung bzw. Absenkung erfolgt, also beispielsweise mit der Einrichtung 24 angehoben und mit der Einrichtung 26 weniger angehoben oder abgesenkt wird, so wird die Dichtringhälfte 18-2 eine kombinierte Translations- und Rotationsbewegung vollführen, wobei die Stelle der Fixiereinrichtung 28 den Drehpunkt des Rotationsanteils darstellt. Es ist klar, dass durch die beiden Justierungen an den Einrichtungen 24, 26 somit eine im Rahmen des Justierbereiches beliebige Positionierung der Dichtringhälfte 18-2 und somit des Dichtringes 18 orthogonal zur Axialrichtung A möglich ist.

Daher erlauben die Einrichtungen 24, 26 und 28 im dargestellten Ausführungsbeispiel insbesondere eine exakt koaxiale Justierung des Dichtringes 18 bezüglich des Turbinenläufers 16.

Ein weiterer Vorteil der Einrichtungen 24, 26 und 28 besteht im dargestellten Ausführungsbeispiel darin, dass bei Auftreten hoher Temperaturen bzw. hoher Temperaturdifferenzen im Bereich der Dichtungsanordnung 10 der Dichtring 18 sich frei ausdehnen kann. Dies ist im dargestellten Ausführungsbeispiel dadurch bedingt, dass die Justiereinrichtungen 24, 26 zwar die betreffenden Vertikalpositionen definieren, die betreffenden Horizontalpositionen jedoch nicht definieren, und dass die Fixiereinrichtung 28 zwar horizontal fixiert, nicht jedoch in vertikaler Richtung.

Ein weiterer Vorteil des dargestellten Ausführungsbeispiels besteht darin, dass eine durch entsprechende Justierungen erzielte Koaxialität des Dichtringes 18 bezüglich des Turbinenläufers 16 bei einer solchen thermischen Ausdehnung des Ringes 18 wenigstens annähernd erhalten bleibt. Dazu trägt im dargestellten Beispiel bei, dass die beiden vertikal justierten Stellen (Einrichtungen 24, 26) sich in Vertikalrichtung betrachtet etwa in der Mitte des Dichtringes 18 befinden, und dass die Stelle der horizontalen Fixierung (Einrichtung 28) sich in Horizontalrichtung betrachtet in der Mitte des Dichtringes 18 befindet. In dieser Hinsicht vorteilhaft ist außerdem, dass die Nuten 82 (der Einrichtungen 24 und 26) wie auch die Nut 48 (der Einrichtung 28) jeweils in radialer Richtung zur Turbinenachse angeordnet sind, mit dem Ziel, etwaige Verschiebungen des Dichtringes 18 durch thermische Einflüsse weitestgehend zu eliminieren.

Vor diesem Hintergrund ist es wie dargestellt bevorzugt, die Justiereinrichtungen 24, 26 in Vertikalrichtung betrachtet nahe der horizontalen Teilungsebene H anzuordnen, insbesondere in einer vertikalen Entfernung von der Teilungsebene H von weniger als 10 %, insbesondere weniger als 5 % der vertikalen Gesamtausdehnung des Dichtringes 18.

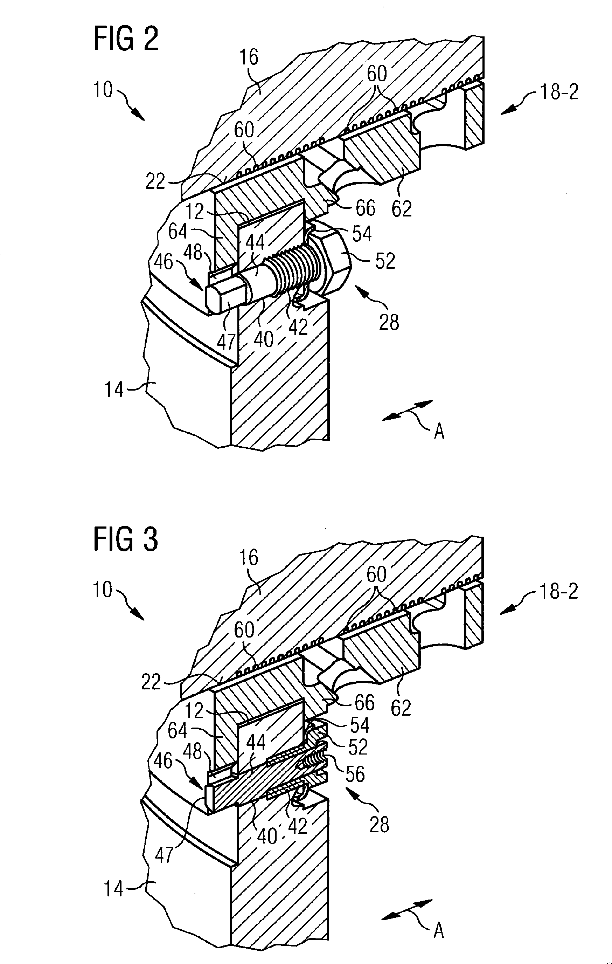

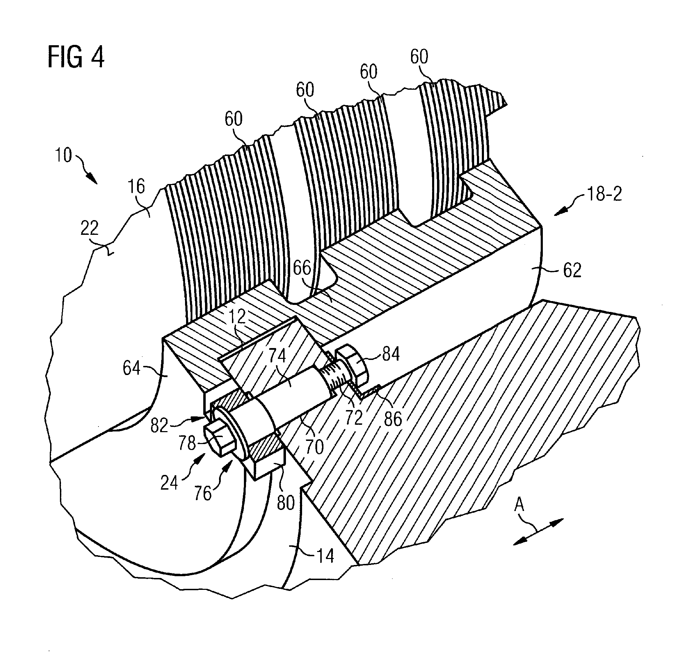

Nachfolgend werden mit Bezug auf die Fig. 2 und 3 die Fixiereinrichtung 28 und mit Bezug auf die Fig. 4 die Justiereinrichtung 24 näher beschrieben.

Die Fig. 2 und 3 zeigen ein Detail der Dichtungsanordnung 10 im Bereich der Justiereinrichtung 28 in perspektivischer Ansicht und teilweise (Fig. 2) bzw. vollständig (Fig. 3) geschnitten (längs der Linie II-II in Fig. 1).

Die Fixiereinrichtung 28 umfasst eine die Stirnwand 14 in Axialrichtung A durchsetzende Fixierstiftöffnung in Form einer Bohrung mit einem konischen Bohrungsabschnitt 40 an der in den Figuren linken Seite (z. B. Innenseite des Turbinengehäuses) und einen im Durchmesser größeren Innengewindeabschnitt 42 auf der in den Figuren rechten Seite (z. B. Außenseite des Turbinengehäuses).

Ferner umfasst die Fixiereinrichtung 28 einen in der aus den Bohrungsabschnitten 40, 42 gebildeten Fixierstiftöffnung gehaltenen Fixierstift 44 mit einem Fixierstiftkopf 46 am linken Ende des Fixierstiftes 44, welcher beiderseits jeweils eine Abflachung aufweist (zueinander parallele Flächen 47) und aus der Fixierstiftöffnung herausragt.

Schließlich umfasst die Fixiereinrichtung 28 eine an der zu fixierenden Stelle der Dichtringhälfte 18-2 in Form einer Nut 48 ausgebildete Fixierstiftaufnahme, in welche der Fixierstiftkopf 46 in Axialrichtung A eingreift, so dass diese Dichtringhälfte 18-2 in Horizontalrichtung bezüglich der Stirnwand 14 und somit des Turbinengehäuses fixiert wird. Die Nut 48 ist nach unten hin offen.

Zur Ausrichtung der Flächen 47 des Fixierstiftkopfes 46 zur Nut 48 der Dichtringhälfte 18-2 während der Montage verfügt der Stift 44 an seinem anderen Ende über einen Sechskant 50 (Fig. 3), welcher mit entsprechendem Werkzeug gedreht werden kann.

Nach erfolgter Montage der Dichtringhälfte 18-2 wird der Stift 44 mittels einer von rechts in den Innengewindeabschnitt 42 eingeschraubten Hohlschraube 52 in den konischen Bohrungsabschnitt 40 gepresst und somit verdrehgesichert und die Bohrung 40, 42 abgedichtet. Ein in den Figuren linkes Ende der Hohlschraube 52 belastet hierfür eine entsprechend dimensionierte und angeordnete Schulter am Umfang des Fixierstiftes 44. Die Schraube 52 ist durch ein Sicherungsblech 54 gesichert.

Bei notwendiger Demontage der Dichtringhälfte 18-2 kann nach einem Herausschrauben der Hohlschraube 52 der Fixierstift 44 durch Einschrauben eines geeigneten Werkzeuges in eine am rechten Ende des Fixierstiftes 44 ausgebildete Innengewindebohrung 56 aus der Fixierstiftöffnung entfernt werden.

Sodann kann die Dichtringhälfte 18-2 (auch bei eingebautem Turbinenläufer 16 durch eine Drehung (um die Achse des Turbinenläufers 16 herum) aus dem Turbinengehäuse herausgeschwenkt werden. Der zuvor ausgebaute Fixierstift 44 steht einer solchen Drehung nicht im Weg.

Falls der Turbinenläufer 16 bei der Demontage ohnehin ausgebaut wird, so kann nach dem Ausbau des Turbinenläufers 16 die Dichtringhälfte 18-2 auch ohne Demontage der Fixiereinrichtung 28, d. h. Entfernen des Fixierstiftes 44 aus der Fixierstiftöffnung, entfernt werden.

Vorteilhaft kann mit der Fixiereinrichtung 28 eine horizontale Fixierung des unteren Scheitelpunktes der Dichtringhälfte 18-2 relativ zur Trennwand 14 und somit dem Turbinengehäuse sichergestellt werden, wobei eine Montage bzw. Demontage des Dichtringes 18 auch bei eingelegtem Turbinenläufer 16 möglich ist.

Der Dichtring 18 kann sich im Turbinenbetrieb bei unterschiedlichen Temperaturprofilen frei ausdehnen.

In Verbindung mit den nachfolgend beschriebenen Justiereinrichtungen 24, 26 im Bereich der Horizontalteilfuge H des Turbinengehäuses ist die genaue Einstellung des notwendigen Spieles zwischen dem Dichtring 18 und dem Turbinenläufer 16 sowohl im Teilfugenbereich als auch im unteren Scheitelpunkt des Dichtringes 18 möglich.

Im dargestellten Ausführungsbeispiel wirkt der Dichtring 18 zusammen mit Labyrinthblechen 60 am Außenumfang des Turbinenläufers 16 für eine labyrinthartige Abdichtung des Ringspaltes zwischen Turbinenläufer 16 und Turbinengehäuse.

Der Dichtring 18 hat im beschriebenen Ausführungsbeispiel im Querschnitt betrachtet einen in Axialrichtung A ausgedehnten und den Ringspalt durchsetzenden Dichtabschnitt 62 und einen in Radialrichtung ausgedehnten, mit der Stirnwand 14 überlappenden und die Nut 48 zur Aufnahme des Fixierstiftkopfes 46 aufweisenden Flanschabschnitt 64. Der Flanschabschnitt 64 schließt sich hierbei an einem axialen Ende (in den Figuren links) an den axialen Dichtabschnitt 62 an. Eine Halterung des Dichtringes 18 in beiden axialen Richtungen ist dadurch realisiert, dass axial betrachtet in einem mittleren Bereich des Dichtabschnittes 62 ein weiterer radial nach außen vorstehender Abschnitt 66 vorgesehen ist, so dass das radial innere Ende der Trennwand 14 in Axialrichtung A zwischen dem Flanschabschnitt 64 und dem Abschnitt 66 gefangen ist ("Nut- und-Feder-Verbindung").

Fig. 4 zeigt in einer perspektivischen, teilweise geschnittenen Ansicht die Justiereinrichtung 24, wobei die Schnittebene längs der Linie IV-IV in Fig. 1 verläuft. Aufgrund der identischen bzw. symmetrischen Gestaltung der zweiten Justiereinrichtung 26 erübrigt sich deren Beschreibung.

Die Justiereinrichtung 24 umfasst eine die Stirnwand 14 in Axialrichtung A durchsetzende Justierstiftöffnung bestehend aus einem konischen Bohrungsabschnitt 70 (auf der Innenseite der Turbinengehäuses) und einem sich daran anschließenden zylindrischen Bohrungsabschnitt,72.

In der von den Abschnitten 70, 72 gebildeten Justierstiftöffnung ist ein konischer Justierstift 74 mit einem exzentrisch ausgebildeten Justierstiftkopf 76 drehbar eingesetzt und kann mittels eines am Justierstiftkopf 76 vorgesehenen Sechskantes 78 gedreht werden. Der Justierstiftkopf 76 ist im dargestellten Ausführungsbeispiel von einem Gleitstein 80 mit zylindrischer Bohrung umgeben.

Schließlich umfasst die Justiereinrichtung 24 eine an der zu justierenden Stelle der Dichtringhälfte 18-2 als eine Nut 82 ausgebildete Justierstiftaufnahme, in welche der Gleitstein 80 gleitend gepasst ist und durch einen Bund des Justierstiftes 74 gegen ein Herausgleiten gesichert ist. Die Nut 82 ist nach radial außen hin offen.

Durch Drehen des Justierstiftes 74 am Sechskant 78 kann die Dichtringhälfte 18-2 in ihrer vertikalen Position relativ zur Stirnwand 14 und somit zum Turbinengehäuse justiert werden.

Die durch den Exzenter des Justierstiftes 74 zwangsläufig hervorgerufene radiale Bewegung bezüglich der Stirnwand 14 wird durch den in radialer Richtung in der Nut beweglichen Gleitstein 80 kompensiert. Mit einer geeignet eng tolerierten Passung des Gleitsteins 80 in der Nut 82 lässt sich vorteilhaft ein unbeabsichtigtes Anheben des Dichtringes 18 vermeiden.

Am in Fig. 4 rechten Ende des Justierstiftes 74 ist dieser mit einer axialen Innengewindebohrung versehen, in welche eine Sechskantschraube 84 eingeschraubt ist. Diese Schraube 84 dient während der Justierungsarbeiten dazu, den Justierstift 74 im konischen Bohrungsabschnitt 70 spielfrei bewegen zu können und wird nach erfolgter Justierung zur Verspannung des Justierstiftes 74 im konischen Bohrungsabschnitt 70 genutzt, womit eine nachträgliche Verdrehung des Justierstiftes 74 und somit unerwünschte Veränderung der Justierung an der Dichtringhälfte 18-2 vermieden wird.

Die Schraube 84 wird mit einem Sicherungsblech 86 gegen ein Lösen gesichert.

Vorteilhaft kann sich bei einer im Betrieb der Dampfturbine zum Teil hohen Temperaturdifferenz zwischen dem Dichtring 18 und der Stirnwand 14 bzw. dem Turbinengehäuse und der damit verbundenen Differenzdehnung dieser Bauteile der im Allgemeinen wärmere Dichtring 18 in radialer Richtung frei dehnen ohne seine Position bezüglich des Turbinengehäuses zu verändern. Eine Positionseinstellung des Dichtringes 18 sowohl in vertikaler als auch in horizontaler Richtung kann bei eingelegtem Turbinenläufer 16 erfolgen. Für eine eventuelle Demontage der Dichtringhälfte 18-2 können die Fixierstifte der beiden Justiereinrichtungen 24, 26 aus den jeweiligen Justierstiftöffnungen entfernt werden (Der in Fig. 4 gezeigte Justierstift 74 kann nach Entfernen der Schraube 84 z. B. nach links aus dem konischen Bohrungsabschnitt 70 herausgeschlagen werden.

Dies ermöglicht es, die Dichtringhälfte 18-2 durch eine Drehung um die Achse des Turbinenläufers 16 herum aus dem Turbinengehäuse herauszuschwenken.

## Patentansprüche

1. Dampfturbine mit einer Öffnung in einer geteilten Stirnwand (14) eines Dampfturbinengehäuses und einem sich in einer Axialrichtung (A) durch die Öffnung hindurch erstreckenden Turbinenläufer (16), und mit einer Dichtungsanordnung zur Abdichtung eines Ringspaltes zwischen einem Öffnungsrand (12) der Öffnung und dem Turbinenläufer (16), umfassend einen aus mehreren miteinander verbundenen Dichtringsegmenten (18-1, 18-2) zusammengesetzten Dichtring (18), von welchem
- wenigstens eine Stelle im Ringverlauf mittels einer Justiereinrichtung (24, 26) in wenigstens einer Richtung orthogonal zur Axialrichtung (A) justierbar ist, und
- wenigstens eine andere Stelle im Ringverlauf mittels einer Fixiereinrichtung (28) in wenigstens einer Richtung orthogonal zur Axialrichtung fixierbar ist,
wobei die Justiereinrichtung (24, 26) umfasst:
- eine die Stirnwand (14) in Axialrichtung (A) durchsetzende Justierstiftöffnung (70, 72),
- einen in der Justierstiftöffnung (70, 72) gehaltenen Justierstift (74) mit einem exzentrisch ausgebildeten Justierstiftkopf (76) an einem Ende des Justierstiftes (74), und
- eine an der zu justierenden Stelle des Dichtringes (18) ausgebildete Justierstiftaufnahme (82), in welche der Justierstiftkopf (76) in Axialrichtung (A) eingreift.

2. Dampfturbine nach Anspruch 1, wobei die Justiereinrichtung (24, 26) geringfügig unterhalb einer horizontalen Teilungsebene (H) der Stirnwand (14) vorgesehen ist.

3. Dampfturbine nach einem der vorangehenden Ansprüche, wobei die Justiereinrichtung (24, 26) eine Justierung in einer Richtung quer zu einer bei der Fixiereinrichtung (28) vorgesehenen Fixierrichtung gestattet.

4. Dampfturbine nach einem der vorangehenden Ansprüche, wobei die Justierstiftöffnung (70, 72) als eine Bohrung mit einem konischen Bohrungsabschnitt (70) zur Fixierung eines entsprechend konischen Abschnittes des Justierstiftes (74) ausgebildet ist.

5. Dampfturbine nach einem der vorangehenden Ansprüche, wobei der Justierstift (74) an seinem dem Justierstiftkopf (76) abgewandten Ende mit einem Gewinde ausgebildet ist.

6. Dampfturbine nach einem der vorangehenden Ansprüche, wobei der Justierstiftkopf (76) von einem Gleitstein (80) umgeben ist, an dessen oberen und unteren Rand ein oberer bzw. unterer Rand der Justierstiftaufnahme (82) anliegt.

7. Dampfturbine nach einem der vorangehenden Ansprüche, wobei der Justierstiftkopf (76) eine zur Drehbarkeit des Justierstiftes (74) mittels eines Werkzeuges ausgebildete Formgestaltung (78) besitzt.

8. Dampfturbine nach einem der vorangehenden Ansprüche, wobei die Justierstiftaufnahme (82) als eine zum Außenumfang des Dichtringes (18) offene Nut ausgebildet ist.

9. Dampfturbine nach einem der vorangehenden Ansprüche, wobei die Fixiereinrichtung (28) umfasst:
- eine die Stirnwand (14) in Axialrichtung (A) durchsetzende Fixierstiftöffnung (40, 42),
- einen in der Fixierstiftöffnung (40, 42) gehaltenen Fixierstift (44) mit einem Fixierstiftkopf (46) an einem Ende des Fixierstiftes (44), und
- eine an der zu fixierenden Stelle des Dichtringes (18) ausgebildete Fixierstiftaufnahme (48), in welche der Fixierstiftkopf (46) in Axialrichtung (A) eingreift.

10. Dampfturbine nach ach einem der vorangehenden Ansprüche, wobei die Fixiereinrichtung (28) am unteren Scheitelpunkt des Dichtringes (18) vorgesehen ist.

11. Dampfturbine nach einem der Ansprüche 9-10, wobei die Fixierstiftöffnung (40, 42) als eine Bohrung mit einem konischen Bohrungsabschnitt (40) zur Fixierung eines entsprechend konischen Abschnittes des Fixierstiftes (44) ausgebildet ist.

12. Dampfturbine nach einem der Ansprüche 9-11, wobei die Fixierstiftöffnung (40, 42) einen Innengewindeabschnitt (42) zum Einschrauben einer Halteschraube (52) besitzt, welche den Fixierstift (44) in der Fixierstiftöffnung (40, 42) hält.

13. Dampfturbine nach einem der Ansprüche 9-12, wobei die Fixierstiftaufnahme (48) als eine zum Außenumfang des Dichtringes (18) offene Nut ausgebildet ist.

## Claims

1. Steam turbine having an opening in a split end wall (14) of a steam turbine housing and a turbine rotor (16) extending in an axial direction (A) through the opening, and having a seal arrangement for sealing off an annular gap between a rim (12) of the opening and the turbine rotor (16), comprising a sealing ring (18), assembled from a plurality of interconnected sealing ring segments (18-1, 18-2), of which
- at least one position in the annular profile can be adjusted by means of an adjustment device (24, 26) in at least one direction orthogonal to the axial direction (A), and
- at least one other position in the annular profile can be fixed by means of a fixing device (28) in at least one direction orthogonal to the axial direction,
wherein the adjustment device (24, 26) comprises:
- an adjustment pin opening (70, 72) which passes through the end wall (14) in the axial direction (A),
- an adjustment pin (74) which is held in the adjustment pin opening (70, 72) and has an eccentrically formed adjustment pin head (76) at one end of the adjustment pin (74), and
- an adjustment pin recess (82) which is formed at the point of the sealing ring (18) to be adjusted and in which the adjustment pin head (76) engages in the axial direction (A).

2. Steam turbine according to Claim 1, wherein the adjustment device (24, 26) is provided marginally below a horizontal parting plane (H) of the end wall (14).

3. Steam turbine according to either of the preceding claims, wherein the adjustment device (24, 26) permits an adjustment in a direction perpendicular to a fixing direction provided by the fixing device (28).

4. Steam turbine according to one of the preceding claims, wherein the adjustment pin opening (70, 72) is formed as a bore having a conical bore section (70) for fixing a corresponding conical section of the adjustment pin (74).

5. Steam turbine according to one of the preceding claims, wherein the adjustment pin (74) is formed with a thread on its opposite end from the adjustment pin head (76).

6. Steam turbine according to one of the preceding claims, wherein the adjustment pin head (76) is surrounded by a sliding block (80) with an upper and lower rim of the adjustment pin recess (82) pressing against the upper and lower edges, respectively, of the sliding block.

7. Steam turbine according to one of the preceding claims, wherein the adjustment pin head (76) has a shape (78) formed such that the adjustment pin (74) can be turned by means of a tool.

8. Steam turbine according to one of the preceding claims, wherein the adjustment pin recess (82) is formed as a groove which is open towards the outer circumference of the sealing ring (18).

9. Steam turbine according to one of the preceding claims, wherein the fixing device (28) comprises:
- a fixing pin opening (40, 42) which passes through the end wall (14) in the axial direction (A),
- a fixing pin (44) which is held in the fixing pin opening (40, 42) and has a fixing pin head (46) at one end of the fixing pin (44), and
- a fixing pin recess (48) which is formed at the point of the sealing ring (18) to be fixed and in which the fixing pin head (46) engages in the axial direction (A).

10. Steam turbine according to one of the preceding claims, wherein the fixing device (28) is provided at the lower extremity of the sealing ring (18).

11. Steam turbine according to either of Claims 9 and 10, wherein the fixing pin opening (40, 42) is formed as a bore having a conical bore section (40) for fixing a corresponding conical section of the fixing pin (44).

12. Steam turbine according to one of Claims 9 to 11, wherein the fixing pin opening (40, 42) has a tapped section (42) for screwing in a holding screw (52) which holds the fixing pin (44) in the fixing pin opening (40, 42).

13. Steam turbine according to one of Claims 9 to 12, wherein the fixing pin recess (48) is formed as a groove which is open towards the outer circumference of the sealing ring (18).

## Revendications

1. Turbine à vapeur avec une ouverture dans une paroi frontale partitionnée (14) d'un carter de turbine à vapeur et une roue motrice de turbine (16) s'étendant à travers l'ouverture dans une direction axiale (16), et avec un agencement d'étanchéité pour rendre étanche un espace annulaire entre un bord d'ouverture (12) de l'ouverture et la roue motrice de turbine (16), comprenant une bague d'étanchéité (18) assemblée à partir de plusieurs segments de bague d'étanchéité (18-1, 18-2) reliés ensemble, bague à partir de laquelle
- au moins une position est ajustable dans la trajectoire de la bague au moyen d'un dispositif d'ajustage (24, 26) dans au moins une direction orthogonale à la direction axiale (A), et
- au moins une autre position peut être fixée dans la trajectoire de la bague au moyen d'un dispositif de fixation (28) dans au moins une direction orthogonale à la direction axiale,
dans lequel le dispositif d'ajustage (24, 26) comprend :
- une ouverture pour tige d'ajustage (70, 72) traversant la paroi frontale (14) dans la direction axiale (A),
- une tige d'ajustage (74) maintenue dans l'ouverture pour tige d'ajustage (70, 72) avec une tête de tige d'ajustage (76) réalisée excentrée au niveau d'une extrémité de la tige d'ajustage (74), et
- un logement de tige d'ajustage (82) réalisé au niveau de la position à ajuster de la bague d'étanchéité (18), dans lequel la tête de tige d'ajustage (76) s'enclenche dans la direction axiale (A).

2. Turbine à vapeur selon la revendication 1, dans laquelle le dispositif d'ajustage (24, 26) est prévu légèrement en dessous d'un plan de partage horizontal (H) de la paroi frontale (14).

3. Turbine à vapeur selon l'une des revendications précédentes, dans laquelle le dispositif d'ajustage (24, 26) permet un ajustage dans une direction transversale à une direction de fixation prévue pour le dispositif de fixation (28).

4. Turbine à vapeur selon l'une des revendications précédentes, dans laquelle l'ouverture pour tige d'ajustage (70, 72) est réalisée en tant qu'alésage avec une section d'alésage conique (70) pour la fixation d'une section correspondante conique de la tige d'ajustage (74).

5. Turbine à vapeur selon l'une des revendications précédentes, dans laquelle la tige d'ajustage (74) est réalisée avec un filetage au niveau de son extrémité opposée à la tête de tige d'ajustage (76).

6. Turbine à vapeur selon l'une des revendications précédentes, dans laquelle la tête de tige d'ajustage (76) est entourée par un coulisseau (80), sur le bord supérieur ou inférieur duquel repose un bord supérieur ou inférieur du logement de tige d'ajustage (82).

7. Turbine à vapeur selon l'une des revendications précédentes, dans laquelle la tête de tige d'ajustage (76) possède une configuration (78) réalisée pour rendre possible la rotation de la tige d'ajustage (74) au moyen d'un outil.

8. Turbine à vapeur selon l'une des revendications précédentes, dans laquelle le logement de tige d'ajustage (82) est réalisé en tant que rainure ouverte sur la périphérie externe de la bague d'étanchéité (18).

9. Turbine à vapeur selon l'une des revendications précédentes, dans laquelle le dispositif de fixation (28) comprend :
- une ouverture pour tige de fixation (40, 42) traversant la paroi frontale (14) dans la direction axiale (A),
- une tige de fixation (44) maintenue dans l'ouverture pour tige de fixation (40, 42) avec une tête de tige de fixation (46) au niveau d'une extrémité de la tige de fixation (44), et
- un logement de tige de fixation (48) réalisé au niveau de la position à fixer de la bague d'étanchéité (18), dans lequel la tête de tige de fixation (46) s'enclenche dans la direction axiale (A).

10. Turbine à vapeur selon l'une des revendications précédentes, dans laquelle le dispositif de fixation (28) est prévu au niveau du point culminant inférieur de la bague d'étanchéité (18).

11. Turbine à vapeur selon l'une des revendications 9-10, dans laquelle l'ouverture pour tige de fixation (40, 42) est réalisée en tant qu'alésage avec une section d'alésage conique (40) pour la fixation d'une section correspondante conique de la tige de fixation (44).

12. Turbine à vapeur selon l'une des revendications 9-11, dans laquelle l'ouverture pour tige de fixation (40, 42) possède une section de filetage interne (42) pour le vissage d'une vis de blocage (52), laquelle maintient la tige de fixation (44) dans l'ouverture pour tige de fixation (40, 42).

13. Turbine à vapeur selon l'une des revendications 9-12, dans laquelle le logement de tige de fixation (48) est réalisé en tant que rainure ouverte sur la périphérie externe de la bague d'étanchéité (18).
